# EUROPÄISCHE PATENTSCHRIFT

(11) **EP 0 728 922 B1**
(45) Veröffentlichungstag und Bekanntmachung des Hinweises auf die Patenterteilung: **27.11.2002**
(21) Anmeldenummer: 96101870.2
(22) Anmeldetag: 09.02.1996
(51) Int. Cl.: F02D 23/02, F02D 33/02, F02D 43/00

(54) **Luftmassenregler für eine turboaufgeladene Brennkraftmaschine mit angepasstem I-Anteil**
Controller with adapted integral part for the air mass flow of a turbocharged internal combustion engine
Régulation de débit de masse d'air avec constante d'intégration adaptée pour moteur à combustion interne turbocompressée

(30) Priorität: 21.02.1995 DE 19505915
(43) Veröffentlichungstag der Anmeldung: 28.08.1996
(73) Patentinhaber: Dr.Ing.h.c. F. Porsche Aktiengesellschaft, 70435 Stuttgart (DE)
(72) Erfinder: Kerkau, Martin, D-75443 Oetisheim (DE)

(56) Entgegenhaltungen:
- EP-A- 0 238 144
- WO-A-83/00532
- DE-A- 4 219 791

## Beschreibung

Die Erfindung betrifft einen Luftmassenregler für eine turboaufgeladene Brennkraftmaschine nach dem Oberbegriff des unabhängigen Anspruchs.

Luftmassenregler für turboaufgeladene Brennkraftmaschinen sind als solche bekannt. Ihre Aufgabe ist es, der Brennkraftmaschine eine von der anliegenden Last und der Drehzahl der Brennkraftmaschine abhängige Luftmasse zuzumessen. Die Regelstrecke eines solchen Luftmassenreglers besteht aus folgenden Komponenten: einem Luftmassenmesser zur Erfassung der Luftmasse als Regelgröße, einem Sollwertgeber zur Ermittlung eines Sollwertes der Luftmasse abhängig von der Stellung der Drosselklappe und der Drehzahl der Brennkraftmaschine, einem PID-Regler zur Ermittlung eines Tastverhältnisses für ein Abgas-Bypassventil als Stellgröße sowie dem Bypassventil als Stellglied. Über das Bypassventil, das üblicherweise auf den der Abtgasturbine zugeführten Abgasstrom einwirkt, wird der an der Brennkraftmaschine ansaugseitig anliegende Ladedruck eingestellt.

Ein solches System zur Regelung der Aufladung einer Brennkraftmaschine ist aus der DE 42 19 791 A1 bekannt, wobei hier die vom Luftmassenmesser gemessene Luftmasse mit dem Sollwert verglichen. Der Sollwert ist abhängig von dem Fahrleistungswunsch des Fahrers (hier: Position der Drosselklappe) und der Motordrehzahl in einem Kennfeld abgespeichert. Außerdem gibt es eine Reihe von Parametern, die den Sollwert bei Bedarf korrigieren. Die Differenz zwischen gemessener Luftmasse und Sollwert stellt die Regelabweichung dar, welche im PID-Regler ein neues Tastverhältnis für das Taktventil bestimmt und durch Ansteuerung des Bypassventiles dessen Querschnitt verändert.

Die Regelung der Luftmasse erfolgt dabei so, daß der Fahrer das gewünschte Drehmomentgut dosieren kann und die an der Drosselklappe entstehenden Verluste minimiert werden. Zur Festlegung des Sollwertkennfeldes wird zunächst die Drehmomentkurve für den Grundladedruck (Taktverhältnis = 0%, Bypassventil offen) gemessen. Ausgehend vom Soll-Drehmoment wird eine Tangente an die Drehmoment-Kurve bei Grundladedruck gelegt. Diese Tangente wird nun im Sollwert-Kennfeld abgelegt.

Der PID-Regler hat keine Vorsteuerung, er muß daher schnell sein und trotzdem eine gute Regelstabilität gewährleisten. Die stationären Regelparameter ergeben sich aus einem Schwingversuch nach Ziegler-Nichols. Die dynamischen Parameter werden mit Hilfe von Lastsprüngen mit aufgetrenntem Regelkreis (gesteuert) aus verschiedenen Lasten und Drehzahlen ermittelt. Mit einem rechnergestützten Optimierungsverfahren wird ein Proportional-, Differential- und Integral-Parameterkennfeld erstellt. Die Kennfelder sind über der Drehzahl und einem separat ermittelten Dynamikwert aufgespannt. Die Regelabweichung beeinflußt jeweils P-, I- und D-Anteil.

Bei den bekannten Luftmassenreglern tritt nun das Problem auf, daß beim Beschleunigen in niedrigen Gängen, besonders bei hohen Außentemperaturen, Überschwingen auftritt.

Der Erfindung liegt die Erkenntnis zugrunde, daß dieses beobachtete Überschwingen darauf zurückzuführen ist, daß bei einem Drosselklappensprung, z. B. von 20% auf Vollast, bei hohen Außentemperaturen zunächst eine erhöhte Luftmassen-Regelabweichung aufgrund der geringeren Luftdichte festgestellt wird. Diese führt zu erhöhten I- und P-Anteilen und zum deutlichen Überschwingen der zugeführten Luftmasse über den Sollwert hinaus.

Nach der Erfindung ist es daher vorgesehen, den I-Anteil des Reglers abhängig von der Luftdichte der Umgebungsluft zu bestimmen. Für die bekannten Luftmassenregler bedeutet dies, daß der I-Anteil mit sinkender Luftdichte ebenfalls abfällt. Hiermit ist erreicht, daß bei niedriger Luftdichte und damit ansteigenden Sollwert-Abweichungen der I-Anteil des Luftmassenreglers vermindert ist, dadurch die Annäherung des Istwertes an den Sollwert weniger steil erfolgt und infolgedessen ein Überschwingen vermieden werden kann. Da die Erfindung ohne zusätzliche Regler oder Anpassungsbausteine auskommt, sondern einzig durch Anpassung einer im vorhandenen Luftmassenregler vorgegebenen Größe wirkt, ist die Erfindung besonders einfach und kostengünstig zu realisieren.

Ein weiterer Vorteil ergibt sich durch das Merkmal des unabhängigen Anspruchs, wonach zur Bestimmung der Luftdichte die Temperatur und/oder der Luftdruck der Umgebungsluft berücksichtigt werden. Mit dieser Weiterbildung wird der zur Realisierung der Erfindung notwendige Aufwand weiter vermindert. Da ein solcher Wert, beispielsweise auch in Form einer geographischen Höhe, in Motorsteuergeräten zum Teil bereits intern ermittelt wird, ist mit dieser weiteren Verbesserung ebenfalls nur geringer Aufwand verbunden.

Die Erfindung ist nachstehend anhand des in den Figuren dargestellten Ausführungsbeispieles näher beschrieben. Es zeigen:
Fig. 1 eine Übersicht über eine turboaufgeladene Brennkraftmaschine,
Fig. 2 ein Blockschaltbild eines Luftmassenreglers, und
Fig. 3 ein Diagramm des Verlaufes des Luftmassenwertes bei einem Lastsprung.

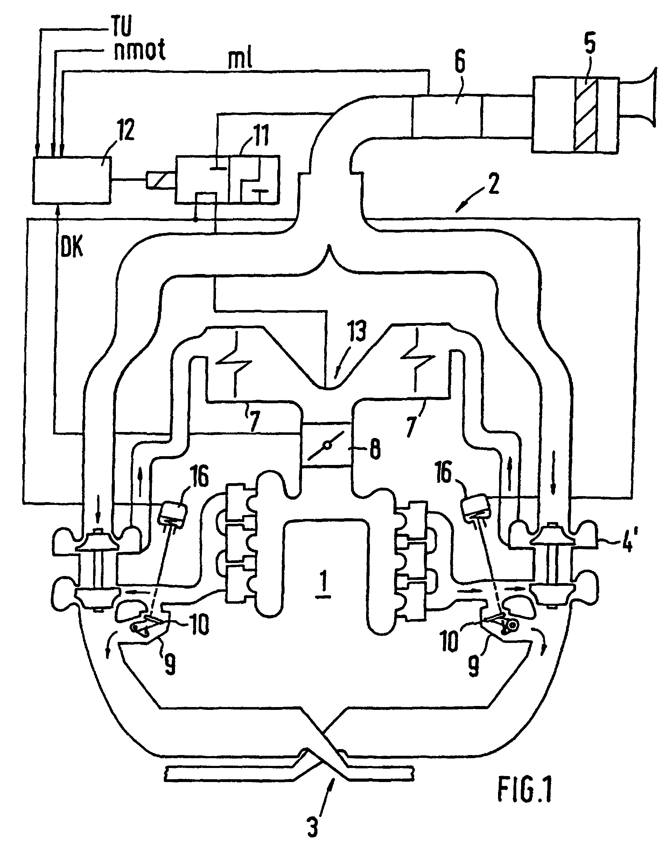

Die in Fig. 1 gezeigte Brennkraftmaschine 1 weist neben einem Ansaugtrakt 2 und einer Abgasanlage 3 zwei Abgasturbolader 4 auf. In der Ansauganlage 2 sind vor dem Eintritt in den Abgasturbolader 4, 4' ein Luftfilter 5 sowie ein Luftmassenmesser 6 angeordnet. Die im Abgasturbolader 4, 4' verdichtete Luft strömt dann durch Ladeluftkühler 7 und eine Drosselklappe 8 in die Brennkraftmaschine 1.

Die Abgase der Brennkraftmaschine 1 können in der Abgasanlage 3 den Abgasturboladern 4 zugeführt werden oder über Bypassleitungen 9, die von Bypassventilen 10 verschlossen werden können, an dem Abgasturbolader 4 vorbeigeleitet werden. Zur Ansteuerung der Bypassventile 10 ist ein Taktventil 11 vorgesehen, das von einem Luftmassenregler 12 über ein Tastverhältnis tv angesteuert wird. Zur Ansteuerung der Bypassventile 10 verwendet das Taktventil 11 Unterdruck, der der Ansauganlage 2 an einer Entnahmestelle 13 zweischen dem Ladeluftkühler 7 und der Drosselklappe 8 entnommen wird.

Die Bypassventile 10 sind zusammen mit den Bypassleitungen 9 jeweils in den Abgasturbolader 4 integriert. Als Stellglied dient je eine Membrandose 16. Mit Hilfe Taktventils 11 kann der Steuerdruck auf die Membrandose 16 beliebig zwischen Umgebungsdruck und dem hinter dem Ladeluftkühler 7 anliegenden Druck eingestellt werden. Der Steuerdruck auf die Membranfläche wirkt gegen eine Federkraft. Der Membranweg wird über ein Gestänge zum Verstellen des Bypassventils 10 geleitet. Beim Tastverhältnis tv von 100% wird die Membrandose 16 entlüftet und das Bypassventil ist geschlossen. Bei einem Tastverhältnis tv von 0% wird der Druck vollständig auf die Membrandose 16 geleitet und das Bypassventil 10 wird geöffnet. Die Ableitung des Bypass-Abgases erfolgt in den sich stark öffnenden Turbinenaustritts-Diffusor.

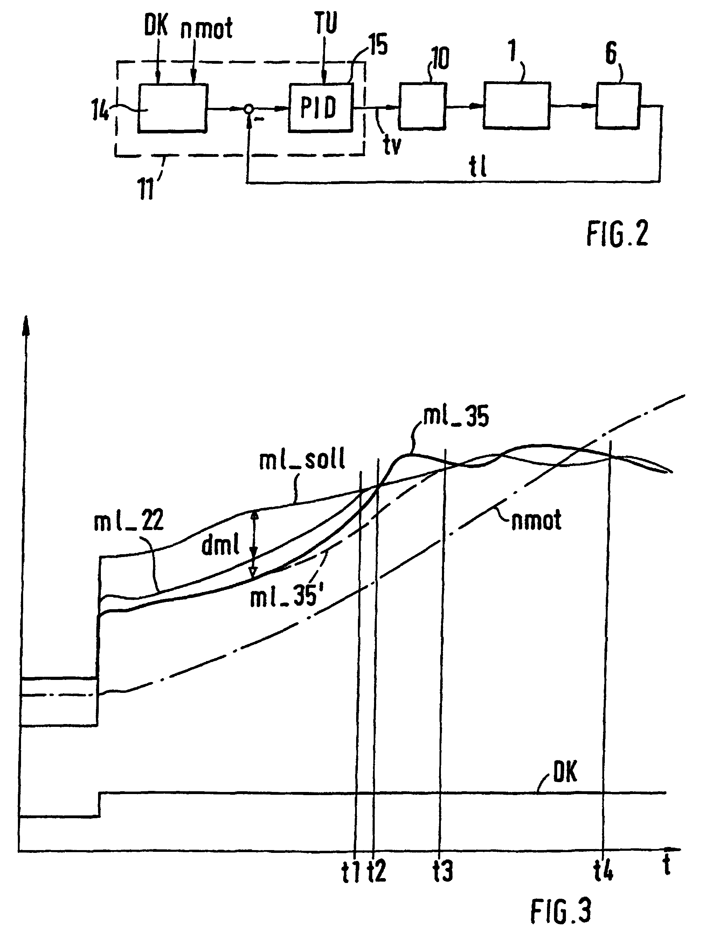

Die Luftmassenregelung ist in Fig. 2 anhand eines Blockschaltbildes dargestellt. Die Regelstrecke bildet die Brennkraftmaschine 1, an der der Luftmassenmesser 6 als Messglied den Istwert der Luftmasse ml bestimmt. Dieser wird dem Luftmassenregler 12 zugeführt und dort mit einem Sollwert für die Luftmasse ml_soll verglichen, der von einem Sollwertgeber 14 abhängig von einer Drehzahl nmot der Brennkraftmaschine 1 und einer Drosselklappenstellung DK der Drosselklappe 8 bestimmt wird. Der Luftmassenregler 12 enthält außerdem einen PID-Regler 15, der neben der Regelabweichung dml mit einem Temperaturwert TU der Ansaug- oder Umgebungsluft beaufschlagt ist. Der PID-Regler 15 liefert als Stellgröße das Tastverhältnis tv an das als Ladedrucksteller arbeitende Bypassventil 10, das als Stellglied den an der Brennkraftmaschine 1 anliegenden Ladedruck und damit die der Brennkraftmaschine 1 zugeführte Luftmasse beeinflusst.

Für eine Optimierung des Gesamtwirkungsgrades, des Ansprechverhaltens und einer programmierbaren Leistungscharakteristik muß der Sollwert für die Luftmasse ml_soll in Abhängigkeit von folgenden Parametern zu regeln sein:
- Drosselklappen-Position/Veränderung DK
- Motordrehzahl nmot
- Ansauglufttemperatur TU
- Umgebungsdruck
- Dynamikerkennung
- Klopferkennung

Das Verhalten des PID-Reglers 15 läßt sich durch eine Parallelschaltung von je einem P-, I- und D-Glied darstellen. Jedem dieser Glieder ist ein Einstellwert zugeordnet, der den Einfluß des jeweils zugeordneten Gliedes bestimmt. Der Einstellwert des I-Gliedes ist die Integralzeit TI. Es ist nun vorgesehen, diese Integralzeit Tl nicht einmalig durch Abstimmung festzulegen, sondern für diese Größe einen Grundwert zu bestimmen, der dann im Betrieb abhängig von der Temperatur TU verändert wird. Die Veränderung wird dabei in der Weise vorgenommen, daß die Integralzeit TI mit steigender Temperatur TU abnimmt, d.h. der Einfluß des 1-Gliedes mit steigender Temperatur TU abnimmt.

Die Wirkungsweise des Luftmassenreglers 11 ist in Fig. 3 in Form eines Diagrammes des zeitlichen Verlaufes der verschiedenen Größen dargestellt. Unter der Annahme, daß die Drehzahl nmot stetig ansteigt, ergibt sich für den Sollwert der Luftmasse ml_soll der gezeigte Verlauf. Bei einer Temperatur TU von 22° C sucht nun der PID-Regler 15 die Regelabweichung dml auszugleichen und steuert das Bypassventil 10 so an, daß die der Brennkraftmaschine 1 zugeführte Luftmasse ml_22 steigt Durch das I-Glied des PID-Reglers 15 wird dabei das Bypassventil 10 immer stärker angesteuert, so daß sich der Istwert für die Luftmasse ml_22 dem Sollwert ml_soll immer schneller annähert. Zum Zeitpunkt t1 ist der Sollwert ml_soll erreicht und der PID-Regler 15 führt nun die Luftmasse ml_22 dem abhängig von der Drosselklappenstellung DK und der Drehzahl nmot ermittelten Sollwert ml_soll nach.

Bei einer Temperatur TU von beispielsweise 35° C ist die Reglerabweichung dml aufgrund der verringerten Luftdichte deutlich größer als zuvor. Zum Ausgleich dieser Reglerabweichung dml benötigt der PID-Regler 15 nun mehr Zeit als zuvor. Damit wächst auch der I-Anteil des PID-Reglers 15 stärker an und das Bypassventil 10 wird infolgedessen stärker angesteuert, d.h. der Ladedruck weiter erhöht. Dies führt dazu, daß der Sollwert für die Luftmasse ml_soll nicht nur erreicht, sondern überschritten wird, und es setzt Überschwingen ein. Der Sollwert ml_soll wird zwar zum Zeitpunkt t2, kann aber erst im Zeitpunkt t4 nach dem Ende des Überschwingens gehalten werden.

Ein Verlauf des Istwertes der Luftmasse ml_35' bei der Temperatur TU von 35° C für einen PID-Regler 15 mit temperaturbeeinflußtem I-Glied ist ebenfalls in Fig. 3 darhestellt. Einhergehend mit der Erhöhung der Temperatur TU um 13° C auf 35° C ist nun die Integrationszeit TI des I-Gliedes vermindert. Ausgehend von der gleichen Reglerabweichung dml wie im zuvor beschriebenen Fall erfolgt nun, besonders In der Endphase, eine im Vergleich zum PID-Regler 15 ohne Anpassung des I-Gliedes weniger rasche Annäherung des Istwertes der Luftmasse ml_35' an den Sollwert ml_soll, d.h., das Bypassventil 10 wird weniger stark angesteuert. Dies führt zwar zu einem geringfügig späteren Erreichen des Sollwertes ml_soll zum Zeitpunkt t3; jedoch wird nun der Sollwert ml_soll in vorteilhafter Weise ohne Überschwingen erreicht und ab dem Zeitpunkt t3 beibehalten, während, wie zuvor beschrieben, beim PID-Regler 15 ohne Anpassung des I-Gliedes der Sollwert zwar zum früheren Zeitpunkt t2 erreicht wird, aber erst im Zeitpunkt t4 nach dem Ende des Überschwingens gehalten werden kann.

Der Luftmassenregler 12 erhält seine Eingangsgrößen Drehzahl nmot, Drosselklappenstellung DK und Temperatur TU von einem nicht gezeigten Motorsteuergerät. Es ist ferner möglich, auch den Istwert der Luftmasse nicht direkt vom Luftmassenmesser 6 dem Luftmassenregler 12 zuzuführen, sondern auch diese Größe vom Motorsteuergerät bereitstellen zu lassen.

Das Ersetzen des Wertes der Luftdichte durch einen Wert für die Temperatur TU stellt eine Annäherung dar, die für den normalen Betrieb einer Brennkraftmaschine 1 ausreichend gut ist. Soll hier eine Verbesserung erreicht werden, so ist es zusätzlich möglich, die Bestimmung der Integrationszeit Tl vom herrschenden Luftdruck bzw. der Höhe, in der die Brennkraftmaschine 1 betrieben wird, abhängig zu machen. Dies kann besonders einfach dort durchgeführt werden, wo beispielsweise das Motorsteuergerät bereits diesen Wert durch einen Vergleich von Drosselklappen-Öffnung DK, Motordrehzahl nmot und Luftmasse ml ermittelt, so daß hierfür kein gesonderter Geber erforderlich ist.

## Patentansprüche

1. Luftmassenregler für eine turboaufgeladene Brennkraftmaschine (1) mit einem Luftmassenmesser (6) zur Erfassung einer Luftmasse (ml) als Regelgröße und einem Ladedrucksteller (10), wobei der Luftmassenregler vom PID-Typ ist, **dadurch gekennzeichnet, daß** der I-Anteil des PID-Reglers (15) abhängig von der Luftdichte der Umgebungsluft ist und daß zur näherungsweisen Bestimmung der Luftdichte die Temperatur (TU) und/oder der Luftdruck der Umgebungsluft verwendet wird.

## Claims

1. An air-mass regulator for a turbo-charged internal-combustion engine (1) with an air-mass sensor (6) for detecting an air mass (**ml**) as a regulating variable and a booster controller (10), wherein the air-mass regulator is of the PID type, **characterized in that** the I-portion of the PID regulator (15) is dependent upon the air density of the surrounding air, and the temperature (**TU**) and/or the air pressure of the surrounding air is or are used for determining the air density by approximation.

## Revendications

1. Régulateur de masse d'air pour un moteur à combustion interne turbocompressé (1) avec un appareil de mesure de la masse d'air (6) pour la détection d'une masse d'air (ml) comme grandeur de réglage et un organe de réglage de la pression d'admission (10), l'appareil de mesure de la masse d'air étant du type PID, **caractérisé en ce que** la portion I du régulateur PID (15) est dépendante de la densité de l'air ambiant et **en ce que**, pour une détermination par approximation de la densité de l'air, on utilise la température (TU) et/ou la pression de l'air ambiant.
